# EUROPEAN PATENT SPECIFICATION

(11) **EP 2 688 296 B1**
(45) Date of publication and mention of the grant of the patent: **30.05.2018**
(21) Application number: 11863884.0
(22) Date of filing: 08.07.2011
(51) Int. Cl.: H04N 7/18, G08B 13/196, H04N 21/418, H04N 21/472, H04N 21/488, H04N 21/218

(54) **VIDEO MONITORING SYSTEM AND METHOD**
VIDEOÜBERWACHUNGSSYSTEM UND VERFAHREN
SYSTÈME ET PROCÉDÉ DE SURVEILLANCE VIDÉO

(30) Priority: 18.04.2011 CN 201110096696
(43) Date of publication of application: 22.01.2014
(73) Proprietor: ZTE Corporation, Shenzhen, Guangdong 518057 (CN)
(72) Inventor: WU, Shaohua, Shenzhen Guangdong 518057 (CN)
(74) Representative: HGF Limited
(86) International application number: PCT/CN2011/076972
(87) International publication number: WO 2012/142797

(56) References cited:
- CA-A1- 2 716 705
- CN-A- 1 913 461
- CN-A- 101 098 466
- CN-A- 101 119 482
- THOMAS KUO ET AL: "Design and implementation of a wide area, large-scale camera network", COMPUTER VISION AND PATTERN RECOGNITION WORKSHOPS (CVPRW), 2010 IEEE COMPUTER SOCIETY CONFERENCE ON, IEEE, PISCATAWAY, NJ, USA, 31 December 2010 (2010-12-31), - 31 December 2010 (2010-12-31), pages 25-32, XP031728798, ISBN: 978-1-4244-7029-7

## Description

### Technical Field

The present document relates to the field of video monitoring and internet technologies, and in particular, to a video monitoring system and method.

### Background of the Related Art

Intelligent video monitoring technologies derive from the research on computer vision and artificial intelligence, and its main research purpose is to use the computer vision technology, the image video processing technology and the artificial intelligence technology to describe, understand and analyze the content of the monitored video, and be able to control the video monitoring system according to the result of analysis, so that the video monitoring system has a higher level of intelligent level.

The intelligent video analysis module first improves the quality of the image by image restoration or super-resolution restoration techniques after obtaining video sequences, and then detects, classifies and tracks the target in the scenario to implement the analysis and understanding of the content of the video, including detection of abnormality in the scenario, identity recognition of a person, and understanding and description of the content of the video etc., and generates an alarm according to the set rule and triggers subsequent service processes.

According to the location where the intelligent video analysis module is located, the intelligent video monitoring products can be divided into two forms: front-end intelligence and back-end intelligence.

The front-end intelligence is implemented by means of Digital Signal processing (DSP), loads the intelligent video analysis algorithms into front-end devices such as the video server, the digital hard disk video recorder or network cameras etc., and directly analyzes the video data acquired by the camera. As the powerful hardware processing capacity of the DSP is utilized, and at the same time, the architecture of the front-end device is prioritized for a specific intelligent video analysis algorithm, thus improving the video analysis accuracy, Therefore, at present, much of the intelligent video monitoring products are front-end intelligence. As the front-end intelligence needs to configure the DSP on each front-end device to analyze the video data, which results in the high architecture cost and high maintenance cost of the device system.

The back-end intelligence can be implemented by pure software, runs on a normal Personal Computer (PC) or a server, and constitutes a video analysis server. After obtaining the compressed video stream, the video analysis server decodes, analyzes and processes the video. The advantage of the back-end intelligence is that it can be easily combined with other video monitoring application software, and does not need to replace and upgrade the existing front-end device, and protects the original investment. At the same time, the video analysis server can be time-sharing multiplexed by multi-channel video analysis, thus reducing the whole investment of the system. But the back-end intelligence is restricted by the processing capability of the video analysis server, which results in a lower accuracy of the video analysis.

CA2716705 discloses a method comprising transmitting video data from a source end to a central server via a Wide Area Network (WAN). The video data includes video data relating to an event of interest, and is captured using a video camera disposed at the source end. Via a plurality of streams, the video data is transmitted from the central server to each one of a plurality of different video analytics engines. Different video analytics processing of the video data is performed using each one of the plurality of different video analytics engines.

### Summary of the Invention

The purpose of the present document is to provide a video monitoring system and method, to solve the problem of how to improve the accuracy of the video analysis.

In order to solve the above technical problem, the present document is as defined in the present independent claims. The embodiments herein comprise: a front-end data acquisition device, a front-end access device and a cloud system, wherein,
the front-end data acquisition device is configured to acquire a video image and transmit video image data to the front-end access device; the front-end access device is configured to transmit the video image data transmitted by the front-end data acquisition device to the cloud system; and
the cloud system is configured to analyze the video image data and generate an alarm when a behavior of a target in the video image acquired by the front-end data acquisition device is abnormal.

In the above system, the cloud system comprises: a video analysis server and a control server, wherein,
the video analysis server is configured to analyze the video image data;
the control server is configured to generate an alarm when the video analysis server determines that a behavior of a target in the video image acquired by the front-end data acquisition device is abnormal.

In the above system, the video analysis server is configured to analyze the video image data by the following way:
pre-establishing a background model, after receiving the video image data, matching a graphic background with the pre-established background model to select a matched background model; and
selecting a target detection algorithm and a target tracking algorithm according to parameters of the matched background model, detecting and tracking a target in the image background, extracting the target, matching the extracted target with a target sample to identify features of the target, analyzing a behavior of the target according to the features of the target and a preset monitoring rule to determine whether the behavior of the target is abnormal.

The system further comprises: a terminal access device and a monitoring terminal, wherein, the cloud system further comprises a video storage server, wherein,
the front-end access device is further configured to transmit the video image data to the video storage server;
the control server is further configured to notify the video storage server to transmit the video image data to the monitoring terminal after receiving a view command from the monitoring terminal;
the video storage server is configured to store the video image data, and transmit the video image data to the terminal access device after receiving the notification from the control server;
the terminal access device is configured to transmit the view command from the monitoring terminal to the control server, and transmit the video image data transmitted by the video storage server to the monitoring terminal.

In the above system, the terminal access device is further configured to record device parameters of the monitoring device when the monitoring terminal accesses, convert the video image data according to the device parameters of the monitoring terminal after receiving the video image data transmitted by the video storage server, and transmit the converted video image data to the monitoring terminal.

In order to solve the above technical problem, one video monitoring method of the present document comprises:
a front-end data acquisition device acquiring a video image and transmit video image data to a front-end access device;
the front-end access device transmitting the video image data transmitted by the front-end data acquisition device to a cloud system; and
the cloud system analyzing the video image data and generating an alarm when a behavior of a target in the video image acquired by the front-end data acquisition device is abnormal.

In the above method,
the cloud system comprises: a video analysis server and a control server;
in the step of the cloud system analyzing the video image data, the video analysis server analyzes the video image data;
in the step of the cloud system generating an alarm when a behavior of a target in the video image acquired by the front-end data acquisition device is abnormal, the control server generates an alarm when the video analysis server determines that a behavior of a target in the video image acquired by the front-end data acquisition device is abnormal.

In the above method, the step of the video analysis server analyzing the video image data comprises:
pre-establishing a background model, after receiving the video image data, matching a graphic background with the pre-established background model to select a matched background model; and
selecting a target detection algorithm and a target tracking algorithm according to parameters of the matched background model, detecting and tracking a target from the image background, extracting the target, matching the extracted target with a target sample to identify features of the target; and
analyzing a behavior of the target according to the features of the target and a preset monitoring rule, and determining whether the behavior of the target is abnormal.

The method further comprises:
when transmitting the video image data to the video analysis server, the front-end access device also transmitting the video image data to the video storage server;
the control server receiving a view command from the monitoring terminal through a terminal access device, and notifying the video storage server to transmit the video image data to the monitoring terminal;
the video storage server storing the video image data, and transmitting the video image data to the terminal access device after receiving the notification from the control server; and
the terminal access device transmitting the video image data transmitted by the video storage server to the monitoring terminal.

The method further comprises:
when the monitoring terminal accesses, the terminal access device recording device parameters of the monitoring device, converting the video image data according to the device parameters of the monitoring terminal after receiving the video image data transmitted by the video storage server, and transmitting the converted video image data to the monitoring terminal.

In order to solve the above technical problem, one cloud system of the present document is configured to:
receive video image data, which are acquired and transmitted to a front-end access device by a front-end data acquisition device, and which are transmitted by the front-end access device to the cloud system; and
analyze the video image data, and generate an alarm when a behavior of a target in the video image acquired by the front-end data acquisition device is abnormal.

The cloud system comprises: a video analysis server and a control server, wherein,
the video analysis server is configured to analyze the video image data;
the control server is configured to generate an alarm when the video analysis server determines that a behavior of a target in the video image acquired by the front-end data acquisition device is abnormal.

In the above cloud system, the video analysis server is configured to analyze the video image data by the following way:
pre-establishing a background model, after receiving the video image data, matching a graphic background with the pre-established background model to select a matched background model; and
selecting a target detection algorithm and a target tracking algorithm according to parameters of the matched background model, detecting and tracking a target from the image background, extracting the target, matching the extracted target with a target sample to identify features of the target, analyzing the behavior of the target according to the features of the target and a preset monitoring rule to determine whether the behavior of the target is abnormal.

The cloud system further comprises: a video storage server, wherein,
the video storage server is configured to receive the video image data transmitted by the front-end access device, and store the video image data; and receive a notification of transmitting the video image data to the monitoring terminal which is transmitted by the control server to the video storage server after the control server receives a view command from the monitoring terminal, and transmit the video image data to the terminal access device after receiving the notification from the control server, so that the terminal access device transmits video image data transmitted by the video storage server to the monitoring terminal.

To sum up, with the present document, the video image data are analyzed through the cloud system, full image analysis and processing can be performed on the monitored scenarios and false-positive and false-negative situations are reduced. At the same time, with the present document, a video image which is most suitable for view by the terminal also can be transmitted according to different monitoring terminals, which saves the bandwidth. And the present document is simple to deploy, and for users, it only needs to deploy devices such as cameras capable of accessing the network etc., without needing to buy an expensive dedicated server, and for the cloud server, it has a powerful functionality and performance and can be a large cluster server, services provided in the cloud can be infinitely extended, and the user can order cloud services flexibly and conveniently.

### Brief Description of Drawings

Fig. 1 is a diagram of architecture of a video monitoring system according to an embodiment of the present document;
Fig. 2 is a flowchart of a method for analyzing video image data according to an embodiment of the present document; and
Fig. 3 is a flowchart of a video monitoring method according to an embodiment of the present document.

### Preferred Embodiments of the Invention

In order to make the purpose, technical schemes and advantages of the present document more clear and apparent, the embodiments of the present document will be further illustrated in detail hereinafter with respect to accompanying drawings. It should be illustrated that embodiments in the present application and features in the embodiments can be combined with each other arbitrarily without conflict.

Cloud computing is a mode of using resources on the Internet, and can be used for public users to perform on-demand quick access depending on the heterogeneous and autonomous services on the Internet. As the resources are on the Internet, and in the flowchart of the computer, the Internet is often represented by a cloud pattern, it can be iconically analogous to cloud computing. The most typical applications of the cloud computing are based on various services of the Internet, including: Google search, online documents (GoogleDocs) and web-based E-mail system (Gmail); and Microsoft's MSN and Hotmail etc.

The cloud computing can be understood as a kind of distributed computing, and its advantage is using a large server cluster in the cloud to provide convenient and extendible services for the client. In the cloud computing, services are provided by the cloud, and have low requirements on the client, and at the same time, has high requirements on the network performance. The mobile communication terminal is relatively suitable for the cloud computing due to small size, limited energy and low hardware configuration. With the advent of 3G generation of the mobile communication, the network performance is no longer the bottleneck of the mobile communication terminal, and the cloud computing has been widely applied in mobile terminals at present.

In order to implement the communication between front-end data acquisition devices such as cameras and encoders etc. and the cloud system, an access link with sufficient bandwidth is allocated to each group of front-end data acquisition devices, and through connection between the front-end access devices and the cloud system, a real-time video image can be quickly transmitted to the cloud system, and the management and invocation of the video image is completed by the cloud system. A user can view the video image through a television wall or a PC, or can view the real-time video image remotely though a mobile terminal. The traditional video monitoring is limited by a bottleneck of the hardware or software processing capacity in terms of image processing, which can be made up through powerful calculation and processing capacity of the cloud computing.

The video monitoring system in the present embodiment comprises: a front-end data acquisition device, a front-end access device, a cloud system, a terminal access device and a monitoring terminal etc., wherein, the cloud system comprises: a video analysis server, a video storage server and a control server.

The front-end data acquisition device, such as a camera, is configured to acquire and compress video image data, and then transmit the compressed video image data to the front-end access device;
the front-end access device is configured to distribute the video image data to a video analysis server and a video storage server, and translate a control command of the cloud system into a standard command of the camera, so that various front-end data acquisition devices (such as the camera) can correctly respond to the command of the control server.

The video analysis and process server is configured to analyze the video image data in real time, determine whether a behavior of a target in the video image is abnormal according to a preset monitoring rule, and generate an alarm if the behavior of the target is abnormal; or also be able to perform linkage monitoring on the area in linkage with other nearby cameras, and generate an alarm according to an alarm generation mode set by a user.

The video storage server is configured to store the video image data for play back and view.

The video control server is configured to process according to the control command sent out by the terminal, other servers and devices.

The video monitoring method according to the present embodiment comprises the following steps:
in step one, monitoring rules and alarm generation modes in different scenarios of monitor video cameras are set by registering on the control server;
in step two, the video image data acquired by the video camera are transmitted to the video analysis server through the front-end access device;
in step three, if after the video image data transmitted in real time are analyzed by the video analysis server, it is found that a behavior of a target in the image background is abnormal, an alarm is generated according to the alarm generation mode preset by the user, for example, by transmitting a short message or being in linkage with 110 or other alarm generation modes, and intensive monitoring is performed on the area by being in linkage with other nearby video cameras at the same time.

If the user is to monitor the condition occurring in the area, the video storage server will transmit a code stream and format suitable for displaying by the terminal according to the terminal type of the user.

The present embodiment further provides a cloud system, which is configured to:
receive video image data, which are acquired and transmitted to a front-end access device by a front-end data acquisition device, and which are transmitted by the front-end access device to the cloud system; and
analyze the video image data, and generate an alarm when a behavior of a target in the video image acquired by the front-end data acquisition device is abnormal.

The cloud system comprises: a video analysis server and a control server, wherein,
the video analysis server is configured to analyze the video image data;
the control server is configured to generate an alarm when a behavior of a target in the video image acquired by the front-end data acquisition device is abnormal.

In the above cloud system, the video analysis server is configured to analyze the video image data by the following way:
pre-establishing a background model, after receiving the video image data, matching a graphic background with the pre-established background model to select a matched background model; and
selecting a target detection algorithm and a target tracking algorithm according to parameters of the matched background model, detecting and tracking a target from the image background, extracting the target, matching the extracted target with a target sample to identify features of the target, analyzing a behavior of the target according to the features of the target and a preset monitoring rule to determine whether the behavior of the target is abnormal.

The above cloud system further comprises: a video storage server, wherein,
the video storage server is configured to receive the video image data transmitted by the front-end access device, and store the video image data; and receive a notification of transmitting the video image data to the monitoring terminal which is transmitted to the video storage server after the control server receives a view command from the monitoring terminal, and transmit the video image data to the terminal access device after receiving the notification from the control server, so that the terminal access device transmits video image data transmitted by the video storage server to the monitoring terminal.

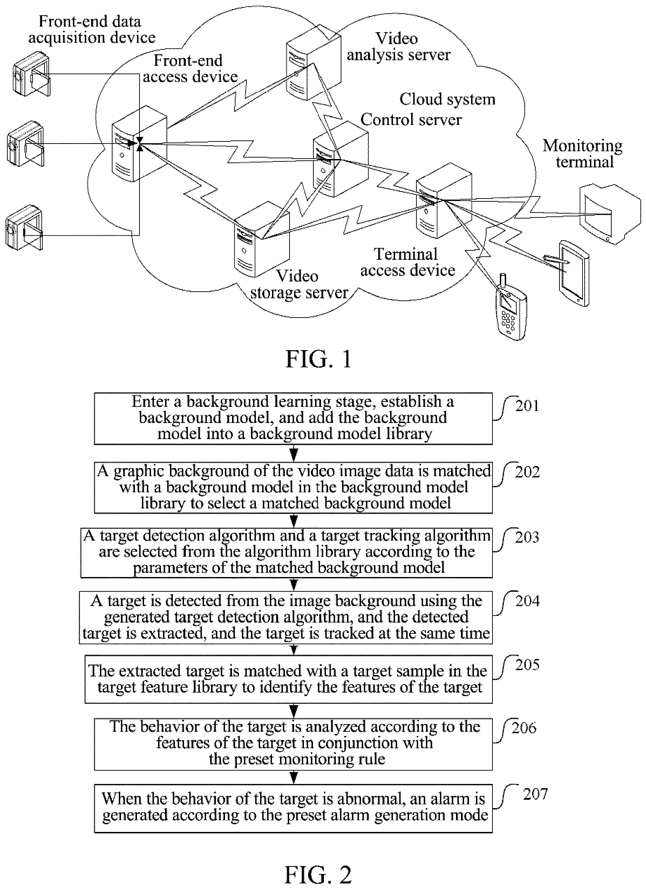

As shown in Fig. 1, the video monitoring system according to the present embodiment comprises: a front data acquisition device, a front-end access device, a video analysis server, a video storage server, a control server, a terminal access device and a monitoring terminal.

The video data acquisition device, such as a camera, can support wireless Internet modes such as wifi or wired Internet modes, so as to access the cloud system.

The front-end access device is configured to distribute the video image data acquired by the camera to the video analysis server and the video storage server.

The video analysis server is configured to analyze the video image data.

Fig. 2 illustrates a process of analyzing video image data by a video analysis server, and the analysis process of the present embodiment adds processes of background matching and target matching compared with the prior art, and the process comprises:
in step 201, the video analysis server enters a background learning stage, establishes a background model, and adds the background model into a background model library;

Establishing the background model is a critical part of background subtraction. According to different scenarios, the time for background learning is different. The background model is generally established by setting time for adaptive learning at a system configuration stage.

As factors such as illumination etc. will result in changes in the background, it needs to relearn at regular intervals to update the original background model.
in step 202, a graphic background of the video image data is matched with a background model in the background model library to select a matched background model;
in step 203, a target detection algorithm and a target tracking algorithm are selected from the algorithm library according to the parameters of the matched background model.

The algorithm library needs to be pre-established, for example, by target detection methods including frame difference, optical flow and background subtraction etc., and the selection of the algorithm is implemented by establishing the parameter values of the background model and mapping information of the algorithm; and the range of parameter values can be an interval.

For example, the parameters of the background model include one light parameter, and the target detection algorithm and the target tracking algorithm which are used can be determined from the mapping information according to the parameter value of the light parameter. In conclusion, with different scenarios, the target detection algorithm and the target tracking algorithm are considerably different, and therefore, the most suitable algorithm needs to be selected according to the established background model.

In step 204, a target is detected from the image background using the generated target detection algorithm, and the detected target is extracted, and the target is tracked at the same time.

In step 205, the extracted target is matched with a target sample in the target feature library to identify the features of the target.

The features of the target can be identified accurately to the most extent by using the full target feature library in the cloud system.

In step 206, the behavior of the target is analyzed according to the features of the target in conjunction with the preset monitoring rule.

In step 207, when the behavior of the target is abnormal, an alarm is generated according to the preset alarm generation mode.

The video storage server is configured to perform cloud storage on the acquired data, for play back and view by the subsequent users.

The video control server is configured to parse the command transmitted by the monitoring terminal, control the camera or other servers to take a corresponding action or generate an alarm according to the command transmitted by the video analysis server in accordance with a set alarm generation rule.

The terminal access device is configured to convert the code stream transmitted by the video storage server according to the device parameters (for example, a set resolution, processing capability, and supported video format etc.) transmitted by the monitoring terminal, and transmit the code stream to the monitoring terminal in the most suitable way. When the monitoring terminal accesses the cloud system through the terminal access device, the access device records the device parameters of the terminal.

The monitoring terminals comprise one or more of various monitoring terminals such as a computer, a smart phone, and a television wall etc.

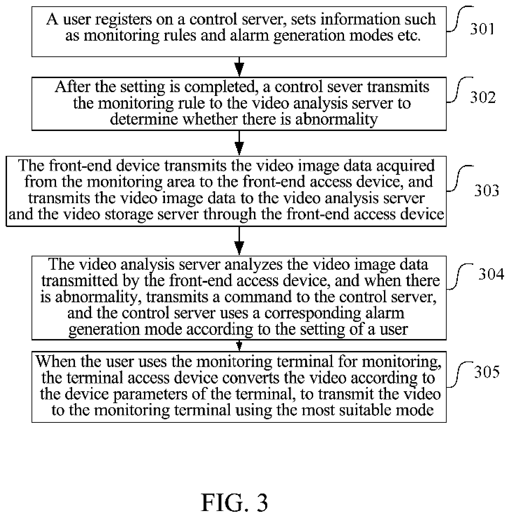

Fig. 3 is a video monitoring method according to an embodiment, comprising:
in 301, a user registers on a control server, sets information such as monitoring rules and alarm generation modes etc.,

The alarm generation modes can use a default processing mode, or can also be user-defined.

In 302, after the setting is completed, a control sever transmits the monitoring rule to the video analysis server to determine whether there is abnormality;
in 303, the front-end device transmits the video image data acquired from the monitoring area to the front-end access device, and transmits the video image data to the video analysis server and the video storage server through the front-end access device;
in 304, the video analysis server analyzes the video image data transmitted by the front-end access device, and when there is abnormality, transmits a command to the control server, and the control server uses a corresponding alarm generation mode according to the setting of a user;
In 305, when the user uses the monitoring terminal for monitoring, the terminal access device converts the video according to the device parameters of the terminal to transmit to the monitoring terminal using the most suitable mode.

A person having ordinary skill in the art can understand that all or a part of steps in the above method can be implemented by programs instructing related hardware, and the programs can be stored in a computer readable storage medium, such as a read-only memory, disk or disc etc. Alternatively, all or a part of steps in the above embodiments can also be implemented by one or more integrated circuits. Accordingly, each module/unit in the above embodiments can be implemented in a form of hardware, and can also be implemented in a form of software functional module. The present document is not limited to a combination of any particular forms of hardware and software.

The above description is merely a reasonable implementation scheme of the present document, and is not used to limit the present document. Any modifications, equivalent substitutions, improvements etc., made within the technical principles and frameworks of the present document, are included in the present technical patent for invention.

### Industrial Applicability

With the present document, the video image data are analyzed through the cloud system, full image analysis and processing can be performed on the monitored scenarios and false-positive and false-negative situations are reduced. At the same time, with the present document, a video image which is most suitable for view by the terminal also can be transmitted according to different monitoring terminals, which saves the bandwidth. And the present document is simple to deploy, and for users, it only needs to deploy devices such as cameras capable of accessing the network etc., without needing to buy an expensive dedicated server, and for the cloud server, it has a powerful functionality and performance and can be a large cluster server, services provided in the cloud can be infinitely extended, and the user can order cloud services flexibly and conveniently.

## Claims

1. A video monitoring system, comprising: a front-end data acquisition device, a front-end access device and a cloud system, wherein,
the front-end data acquisition device is configured to acquire (303) a video image and transmit video image data to the front-end access device;
the front-end access device is configured to transmit the video image data transmitted by the front-end data acquisition device to the cloud system; and
the cloud system is configured to analyze (304) the video image data and generate an alarm when a behavior of a target in the video image acquired by the front-end data acquisition device is abnormal;
**characterized in that**, the cloud system comprises: a video analysis server and a control server, wherein,
the video analysis server is configured to analyze the video image data;
the control server is configured to generate an alarm when the video analysis server determines that a behavior of a target in the video image acquired by the front-end data acquisition device is abnormal;
wherein,
the video analysis server is configured to analyze the video image data by a following way:
pre-establishing (201) a background model, after receiving the video image data, matching (202) a graphic background with the pre-established background model to select a matched background model; and
selecting (203) a target detection algorithm and a target tracking algorithm according to parameters of the matched background model, detecting and tracking (204) a target in the image background, extracting the target, matching (205) the extracted target with a target sample to identify features of the target, analyzing (206) a behavior of the target according to the features of the target and a preset monitoring rule to determine (207) whether the behavior of the target is abnormal.

2. The system according to claim 1, further comprising: a terminal access device and a monitoring terminal, wherein, the cloud system further comprises a video storage server, wherein,
the front-end access device is further configured to transmit the video image data to the video storage server;
the control server is further configured to notify the video storage server to transmit the video image data to the monitoring terminal after receiving a view command from the monitoring terminal;
the video storage server is configured to store the video image data, and transmit the video image data to the terminal access device after receiving the notification from the control server;
the terminal access device is configured to transmit the view command from the monitoring terminal to the control server, and transmit the video image data transmitted by the video storage server to the monitoring terminal.

3. The system according to claim 2, wherein,
the terminal access device is further configured to record device parameters of the monitoring device when the monitoring terminal accesses, convert the video image data according to the device parameters of the monitoring terminal after receiving the video image data transmitted by the video storage server, and transmit the converted video image data to the monitoring terminal.

4. A video monitoring method, comprising:
a front-end data acquisition device acquiring (303) a video image and transmit video image data to a front-end access device;
the front-end access device transmitting the video image data transmitted by the front-end data acquisition device to a cloud system; and
the cloud system analyzing (304) the video image data and generating an alarm when a behavior of a target in the video image acquired by the front-end data acquisition device is abnormal;
**characterized in that**,
the cloud system comprises: a video analysis server and a control server;
in the step of the cloud system analyzing the video image data, the video analysis server analyzes the video image data;
in the step of the cloud system generating an alarm when a behavior of a target in the video image acquired by the front-end data acquisition device is abnormal, the control server generates an alarm when the video analysis server determines that a behavior of a target in the video image acquired by the front-end data acquisition device is abnormal;
wherein, the step of the video analysis server analyzing the video image data comprises:
pre-establishing (201) a background model, after receiving the video image data, matching (202) a graphic background with the pre-established background model to select a matched background model; and
selecting (203) a target detection algorithm and a target tracking algorithm according to parameters of the matched background model, detecting and tracking (204) a target in the image background, extracting the target, matching (205) the extracted target with a target sample to identify features of the target; and
analyzing (206) a behavior of the target according to the features of the target and a preset monitoring rule, and determining (207) whether the behavior of the target is abnormal.

5. The method according to claim 4, further comprising:
when transmitting the video image data to the video analysis server, the front-end access device also transmitting the video image data to the video storage server;
the control server receiving a view command from the monitoring terminal through a terminal access device, and notifying the video storage server to transmit the video image data to the monitoring terminal;
the video storage server storing the video image data, and transmitting the video image data to the terminal access device after receiving the notification from the control server; and
the terminal access device transmitting the video image data transmitted by the video storage server to the monitoring terminal.

6. The method according to claim 5, further comprising:
when the monitoring terminal accesses, the terminal access device recording device parameters of the monitoring device, converting the video image data according to the device parameters of the monitoring terminal after receiving the video image data transmitted by the video storage server, and transmitting the converted video image data to the monitoring terminal.

7. A cloud system, wherein, the cloud system is configured to:
receive video image data, which are acquired (303) and transmitted to a front-end access device by a front-end data acquisition device, and which are transmitted by the front-end access device to the cloud system; and
analyze (304) the video image data, and generate an alarm when a behavior of a target in the video image acquired by the front-end data acquisition device is abnormal;
**characterized by** further comprising: a video analysis server and a control server, wherein,
the video analysis server is configured to analyze the video image data;
the control server is configured to generate an alarm when the video analysis server determines that a behavior of a target in the video image acquired by the front-end data acquisition device is abnormal; wherein,
the video analysis server is configured to analyze the video image data by a following way:
pre-establishing (201) a background model, after receiving the video image data, matching (202) a graphic background with the pre-established background model to select a matched background model; and
selecting (203) a target detection algorithm and a target tracking algorithm according to parameters of the matched background model, detecting and tracking (204) a target in the image background, extracting the target, matching (205) the extracted target with a target sample to identify features of the target, analyzing (206) the behavior of the target according to the features of the target and a preset monitoring rule to determine (207) whether the behavior of the target is abnormal.

8. The cloud system according to claim 7, further comprising: a video storage server, wherein,
the video storage server is configured to receive the video image data transmitted by the front-end access device, and store the video image data; and receive a notification of transmitting the video image data to the monitoring terminal which is transmitted by the control server to the video storage server after the control server receives a view command from the monitoring terminal, and transmit the video image data to the terminal access device after receiving the notification from the control server, so that the terminal access device transmits video image data transmitted by the video storage server to the monitoring terminal.

## Patentansprüche

1. Video-Überwachungssystem, aufweisend: eine Frontend-Datenerfassungseinheit, eine Frontend-Zugriffseinheit und ein Cloud-System, wobei die Frontend-Datenerfassungseinheit konfiguriert ist, um ein Videobild zu erfassen (303) und Videobilddaten an die Frontend-Zugriffseinheit zu übertragen;
die Frontend-Zugriffseinheit konfiguriert ist, die von der Frontend-Datenerfassungseinheit übertragenen Videobilddaten an das Cloud-System zu übertragen; und
das Cloud-System konfiguriert ist, die Videobilddaten zu analysieren (304) und einen Alarm zu erzeugen, wenn ein Verhalten eines Ziels in dem Videobild, das von der Frontend-Datenerfassungseinheit erfasst wurde, abnormal ist;
**dadurch gekennzeichnet, dass** das Cloud-System aufweist: einen Video-Analyseserver und einen Kontrollserver, wobei
der Video-Analyseserver konfiguriert ist, um die Videobilddaten zu analysieren;
der Kontrollserver konfiguriert ist, um einen Alarm zu erzeugen, wenn der Video-Analyseserver bestimmt, dass ein Verhalten eines Ziels in dem Videobild, das von der Frontend-Datenerfassungseinheit erfasst wurde, abnormal ist;
der Video-Analyseserver konfiguriert ist, um die Videobilddaten auf folgende Weise zu analysieren:
Vorabfestlegen (201) eines Hintergrundmodells, nach Empfangen der Videobilddaten Abgleichen (202) eines grafischen Hintergrunds mit dem vorab festgelegten Hintergrundmodell, um ein abgestimmtes Hintergrundmodell auszuwählen; und
Auswählen (203) eines Zielerkennungsalgorithmus und eines Zielverfolgungsalgorithmus gemäß Parametern des abgestimmten Hintergrundmodells, Erkennen und Verfolgen (204) eines Ziels in dem Bildhintergrund, Extrahieren des Ziels, Abgleichen (205) des extrahierten Ziels mit einem Zielmuster, um Merkmale des Ziels zu identifizieren, Analysieren (206) eines Verhaltens des Ziels gemäß den Merkmalen des Ziels und einer voreingestellten Überwachungsregel, um zu bestimmen (207), ob das Verhalten des Ziels abnormal ist.

2. System nach Anspruch 1, ferner aufweisend: eine Terminalzugriffseinheit und ein Überwachungsterminal, wobei das Cloud-System ferner einen Video-Speicherserver aufweist, wobei die Frontend-Zugriffseinheit ferner konfiguriert ist, um die Videobilddaten zu dem Video-Speicherserver zu übertragen;
der Kontrollserver ferner konfiguriert ist, um den Video-Speicherserver zu benachrichtigen, die Videobilddaten nach Empfangen eines Anzeigebefehls von dem Überwachungsterminal an das Überwachungsterminal zu übertragen;
der Video-Speicherserver konfiguriert ist, um die Videobilddaten zu speichern und die Videobilddaten nach Empfangen der Benachrichtigung von dem Kontrollserver an die Terminalzugriffseinheit zu übertragen;
die Terminalzugriffseinheit konfiguriert ist, den Anzeigebefehl von dem Überwachungsterminal an den Kontrollserver zu übertragen und die Videobilddaten, die durch den Video-Speicherserver übertragen wurden, an das Überwachungsterminal zu übertragen.

3. System nach Anspruch 2, wobei die Terminalzugriffseinheit ferner konfiguriert ist, um Einheitenparameter der Überwachungseinheit bei Zugreifen des Überwachungsterminals aufzuzeichnen, die Videobilddaten gemäß den Einheitenparametern des Überwachungsterminals nach Empfangen der von dem Video-Speicherserver übertragenen Videobilddaten zu konvertierten, und die konvertierten Videobilddaten an das Überwachungsterminal zu übertragen.

4. Video-Überwachungsverfahren, aufweisend:
eine Frontend-Datenerfassungseinheit, die ein Videobild erfasst (303) und Videobilddaten an eine Frontend-Zugriffseinheit überträgt;
die Frontend-Zugriffseinheit, welche die von der Frontend-Datenerfassungseinheit übertragenen Videobilddaten an ein Cloud-System überträgt; und
das Cloud-System, das die Videobilddaten analysiert (304) und einen Alarm erzeugt, wenn ein Verhalten eines Ziels in dem Videobild, das von der Frontend-Datenerfassungseinheit erfasst wurde, abnormal ist;
**dadurch gekennzeichnet, dass** das Cloud-System aufweist: einen Video-Analyseserver und einen Kontrollserver;
wobei in dem Schritt des Cloud-Systems zum Analysieren der Videobilddaten der Video-Analyseserver die Videobilddaten analysiert;
wobei in dem Schritt des Cloud-Systems zum Erzeugen eines Alarms, dass ein Verhalten eines Ziels in dem Videobild, das von der Frontend-Datenerfassungseinheit erfasst wurde, abnormal ist, der Kontrollserver einen Alarm erzeugt, wenn der Video-Analyseserver bestimmt, dass ein Verhalten eines Ziels in dem Videobild, das von der Frontend-Datenerfassungseinheit erfasst wurde, abnormal ist;
wobei der Schritt des Video-Analyseservers, der die Videobilddaten analysiert, aufweist:
Vorabfestlegen (201) eines Hintergrundmodells, nach Empfangen der Videobilddaten Abgleichen (202) eines grafischen Hintergrunds mit dem vorab festgelegten Hintergrundmodell, um ein abgestimmtes Hintergrundmodell auszuwählen; und
Auswählen (203) eines Zielerkennungsalgorithmus und eines Zielverfolgungsalgorithmus gemäß Parametern des abgestimmten Hintergrundmodells, Erkennen und Verfolgen (204) eines Ziels in dem Bildhintergrund, Extrahieren des Ziels, Abgleichen (205) des extrahierten Ziels mit einem Zielmuster, um Merkmale des Ziels zu identifizieren; und
Analysieren (206) eines Verhalten des Ziels gemäß den Merkmalen des Ziels und einer voreingestellten Überwachungsregel, und Bestimmen (207), ob das Verhalten des Ziels abnormal ist.

5. Verfahren nach Anspruch 4, ferner aufweisend:
beim Übertragen der Videobilddaten an den Video-Analyseserver außerdem Übertragen der Videobilddaten durch die Frontend-Zugriffseinheit an den Video-Speicherserver;
Empfangen eines Anzeigebefehls von dem Überwachungsterminal über die Terminalzugriffseinheit durch den Kontrollserver, und Benachrichtigen des Video-Speicherservers, die Videobilddaten an das Überwachungsterminal zu übertragen;
Speichern der Videobilddaten durch den Video-Speicherserver und Übertragen der Videobilddaten nach Empfangen der Benachrichtigung von dem Kontrollserver an die Terminalzugriffseinheit; und
durch die Terminalzugriffseinheit Übertragen der von dem Video-Speicherserver übertragenen Videobilddaten an das Überwachungsterminal.

6. Verfahren nach Anspruch 5, ferner aufweisend:
bei Zugriff des Überwachungsterminals Aufzeichnen von Einheitenparametern der Überwachungseinheit durch die Terminalzugriffseinheit, Konvertieren der Videobilddaten gemäß den Einheitenparametern des Überwachungsterminals nach Empfangen der von dem Video-Speicherserver übertragenen Videobilddaten, und Übertragen der konvertierten Videobilddaten an das Überwachungsterminal.

7. Cloud-System, wobei das Cloud-System konfiguriert ist zum:
Empfangen von Videobilddaten, die durch eine Frontend-Datenerfassungseinheit erfasst (303) und an eine Frontend-Zugriffseinheit übertragen werden, und die durch die Frontend-Zugriffseinheit an das Cloud-System übertragen werden; und
Analysieren (304) der Videobilddaten und Erzeugen eines Alarms, wenn ein Verhalten eines Ziels in dem Videobild, das von der Frontend-Datenerfassungseinheit erfasst wurde, abnormal ist;
**gekennzeichnet durch** weiteres Aufweisen: eines Video-Analyseservers und eines Kontrollservers, wobei der Video-Analyseserver konfiguriert ist, um die Videobilddaten zu analysieren;
der Kontrollserver konfiguriert ist, um einen Alarm zu erzeugen, wenn der Video-Analyseserver bestimmt, dass ein Verhalten eines Ziels in dem Videobild, das von der Frontend-Datenerfassungseinheit erfasst wurde, abnormal ist; wobei
der Video-Analyseserver konfiguriert ist, um die Videobilddaten auf folgende Weise zu analysieren:
Vorabfestlegen (201) eines Hintergrundmodells, nach Empfangen der Videobilddaten Abgleichen (202) eines grafischen Hintergrunds mit dem vorab festgelegten Hintergrundmodell, um ein abgestimmtes Hintergrundmodell auszuwählen; und
Auswählen (203) eines Zielerkennungsalgorithmus und eines Zielverfolgungsalgorithmus gemäß Parametern des abgestimmten Hintergrundmodells, Erkennen und Verfolgen (204) eines Ziels in dem Bildhintergrund, Extrahieren des Ziels, Abgleichen (205) des extrahierten Ziels mit einem Zielmuster, um Merkmale des Ziels zu identifizieren, Analysieren (206) des Verhaltens des Ziels gemäß den Merkmalen des Ziels und einer voreingestellten Überwachungsregel, um zu bestimmen (207), ob das Verhalten des Ziels abnormal ist.

8. Cloud-System nach Anspruch 7, ferner aufweisend: einen Video-Speicherserver, wobei der Video-Speicher konfiguriert ist, um die Videobilddaten zu empfangen, die durch die Frontend-Zugriffseinheit übertragen wurden, und um die Videobilddaten zu speichern; und Empfangen einer Benachrichtigung zum Übertragen der Videobilddaten an das Überwachungsterminal, die durch den Kontrollserver an den Video-Speicherserver übertragen werden, nachdem der Kontrollserver einen Anzeigebefehl von dem Überwachungsterminal empfängt, und nach Empfangen der Benachrichtigung von dem Kontrollserver Übertragen der Videobilddaten an die Terminalzugriffseinheit, sodass die Terminalzugriffseinheit die durch den Video-Speicherserver übertragenen Videobilddaten an das Überwachungsterminal überträgt.

## Revendications

1. Système de surveillance vidéo, comprenant : un dispositif frontal d'acquisition de données, un dispositif frontal d'accès et un système en nuage, dans lequel,
le dispositif frontal d'acquisition de données est configuré pour acquérir (303) une image vidéo et pour transmettre des données d'image vidéo au dispositif frontal d'accès ;
le dispositif frontal d'accès est configuré pour transmettre les données d'image vidéo transmises par le dispositif frontal d'acquisition de données au système en nuage ; et
le système en nuage est configuré pour analyser (304) les données d'image vidéo et pour générer une alerte lorsqu'un comportement d'une cible dans l'image vidéo acquise par le dispositif frontal d'acquisition de données est anormal ;
**caractérisé en ce que** le système en nuage comprend : un serveur d'analyse vidéo et un serveur de commande, dans lequel,
le serveur d'analyse vidéo est configuré pour analyser les données d'image vidéo ;
le serveur de commande est configuré pour générer une alerte lorsque le serveur d'analyse vidéo détermine qu'un comportement d'une cible dans l'image vidéo acquise par le dispositif frontal d'acquisition de données est anormal ;
dans lequel,
le serveur d'analyse vidéo est configuré pour analyser les données d'image vidéo de la manière suivante :
un préétablissement (201) d'un modèle d'arrière-plan, après la réception des données d'image vidéo, une mise en correspondance (202) d'un arrière-plan graphique avec un modèle d'arrière-plan préétabli pour sélectionner un modèle d'arrière-plan mis en correspondance ; et
une sélection (203) d'un algorithme de détection de cible et d'un algorithme de suivi de cible conformément à des paramètres du modèle d'arrière-plan mis en correspondance, une détection et un suivi (204) d'une cible dans l'arrière-plan d'image, une extraction de la cible, une mise en correspondance (205) de la cible extraite avec un échantillon de cible de façon à identifier des caractéristiques de la cible, une analyse (206) d'un comportement de la cible conformément aux caractéristiques de la cible et à une règle de surveillance prédéfinie de façon à déterminer (207) si le comportement de la cible est anormal.

2. Système selon la revendication 1, comprenant en outre : un dispositif terminal d'accès et un terminal de surveillance, dans lequel, le système en nuage comprend en outre un serveur de mémorisation vidéo, dans lequel,
le dispositif frontal d'accès est en outre configuré pour transmettre les données d'image vidéo au serveur de mémorisation vidéo ;
le serveur de commande est en outre configuré pour notifier au serveur de mémorisation vidéo de transmettre les données de l'image vidéo au terminal de surveillance après la réception d'une instruction de visualisation du terminal de surveillance ;
le serveur de mémorisation vidéo est configuré pour mémoriser les données d'image vidéo, et pour transmettre les données d'image vidéo au dispositif terminal d'accès après la réception de la notification du serveur de commande ;
le dispositif terminal d'accès est configuré pour transmettre l'instruction de visualisation du terminal de surveillance au serveur de commande, et pour transmettre les données d'image vidéo transmises par le serveur de mémorisation vidéo au terminal de surveillance.

3. Système selon la revendication 2, dans lequel,
le dispositif terminal d'accès est en outre configuré pour enregistrer des paramètres de dispositif du dispositif de surveillance lors d'un accès par le terminal de surveillance, pour convertir les données d'image vidéo conformément aux paramètres de dispositif du terminal de surveillance après la réception des données d'image vidéo transmises par le serveur de mémorisation vidéo, et pour transmettre les données d'image vidéo converties au terminal de surveillance.

4. Procédé de surveillance vidéo, comprenant :
un dispositif frontal d'acquisition de données acquérant (303) une image vidéo et transmettant des données d'image vidéo à un dispositif frontal d'accès ;
le dispositif frontal d'accès transmettant les données d'image vidéo transmises par le dispositif frontal d'acquisition de données à un système en nuage ; et
le système en nuage analysant (304) les données d'image vidéo et générant une alerte lorsqu'un comportement d'une cible dans l'image vidéo acquise par le dispositif frontal d'acquisition de données est anormal ;
**caractérisé en ce que**,
le système en nuage comprend : un serveur d'analyse vidéo et un serveur de commande ;
lors de l'étape à laquelle le système en nuage analyse les données d'image vidéo, le serveur d'analyse vidéo analyse les données d'image vidéo ;
lors de l'étape à laquelle le système en nuage génère une alerte lorsqu'un comportement d'une cible dans l'image vidéo acquise par le dispositif frontal d'acquisition de données est anormal, le serveur de commande génère une alerte lorsque le serveur d'analyse vidéo détermine qu'un comportement d'une cible dans l'image vidéo acquise par le dispositif frontal d'acquisition de données est anormal ;
dans lequel, l'étape à laquelle le serveur d'analyse vidéo analyse les données d'image vidéo comprend :
un préétablissement (201) d'un modèle d'arrière-plan, après la réception des données d'image vidéo, une mise en correspondance (202) d'un arrière-plan graphique avec le modèle d'arrière-plan préétabli pour sélectionner un modèle d'arrière-plan mis en correspondance ; et
une sélection (203) d'un algorithme de détection de cible et d'un algorithme de suivi de cible conformément à des paramètres du modèle d'arrière-plan mis en correspondance, une détection et un suivi (204) d'une cible dans l'arrière-plan d'image, une extraction de la cible, une mise en correspondance (205) de la cible extraite avec un échantillon de cible de façon à identifier des caractéristiques de la cible ; et
une analyse (206) d'un comportement de la cible conformément aux caractéristiques de la cible et à une règle de surveillance prédéfinie, et une détermination (207) du fait que le comportement de la cible est éventuellement anormal.

5. Procédé selon la revendication 4, comprenant en outre :
lors de la transmission des données d'image vidéo au serveur d'analyse vidéo, le dispositif frontal d'accès transmettant également les données d'image vidéo au serveur de mémorisation vidéo ;
le serveur de commande recevant une instruction de visualisation du terminal de surveillance par l'intermédiaire d'un dispositif terminal d'accès, et notifiant au serveur de mémorisation vidéo de transmettre les données d'image vidéo au terminal de surveillance ;
le serveur de mémorisation vidéo mémorisant les données d'image vidéo, et transmettant les données d'image vidéo au dispositif terminal d'accès après la réception de la notification du serveur de commande ; et
le dispositif terminal d'accès transmettant les données d'image vidéo transmises par le serveur de mémorisation vidéo au terminal de surveillance.

6. Procédé selon la revendication 5, comprenant en outre :
lors d'un accès par le terminal de surveillance, le dispositif terminal d'accès enregistrant des paramètres de dispositif du dispositif de surveillance, convertissant les données d'image vidéo conformément aux paramètres de dispositif du terminal de surveillance après la réception des données d'image vidéo transmises par le serveur de mémorisation vidéo, et transmettant les données d'image vidéo converties au terminal de surveillance.

7. Système en nuage, dans lequel, le système en nuage est configuré pour :
recevoir des données d'image vidéo, qui sont acquises (303) et transmises à un dispositif frontal d'accès par un dispositif frontal d'acquisition de données, et qui sont transmises par le dispositif frontal d'accès au système en nuage ; et
analyser (304) les données d'image vidéo, et générer une alerte lorsqu'un comportement d'une cible dans l'image vidéo acquise par le dispositif frontal d'acquisition de données est anormal ;
**caractérisé en ce qu'**il comprend en outre : un serveur d'analyse vidéo et un serveur de commande, dans lequel,
le serveur d'analyse vidéo est configuré pour analyser les données d'image vidéo ;
le serveur de commande est configuré pour générer une alerte lorsque le serveur d'analyse vidéo détermine qu'un comportement d'une cible dans l'image vidéo acquise par le dispositif frontal d'acquisition de données est anormal ; dans lequel,
le serveur d'analyse vidéo est configuré pour analyser les données d'image vidéo de la manière suivante :
un préétablissement (201) d'un modèle d'arrière-plan, après la réception des données d'image vidéo, une mise en correspondance (202) d'un arrière-plan graphique avec un modèle d'arrière-plan préétabli pour sélectionner un modèle d'arrière-plan mis en correspondance ; et
une sélection (203) d'un algorithme de détection de cible et d'un algorithme de suivi de cible conformément à des paramètres du modèle d'arrière-plan mis en correspondance, une détection et un suivi (204) d'une cible dans l'arrière-plan d'image, une extraction de la cible, une mise en correspondance (205) de la cible extraite avec un échantillon de cible de façon à identifier des caractéristiques de la cible, une analyse (206) du comportement de la cible conformément aux caractéristiques de la cible et à une règle de surveillance prédéfinie de façon à déterminer (207) si le comportement de la cible est anormal.

8. Système en nuage selon la revendication 7, comprenant en outre : un serveur de mémorisation vidéo, dans lequel,
le serveur de mémorisation vidéo est configuré pour recevoir les données d'image vidéo transmises par le dispositif frontal d'accès, et pour mémoriser les données d'image vidéo ; et pour recevoir une notification de transmission des données d'image vidéo au terminal de surveillance qui sont transmises par le serveur de commande au serveur de mémorisation vidéo après la réception, par le serveur de commande, d'une instruction de visualisation du terminal de surveillance, et pour transmettre les données d'image vidéo au dispositif terminal d'accès après la réception de la notification du serveur de commande, de sorte que le dispositif terminal d'accès transmette les données d'image vidéo transmises par le serveur de mémorisation vidéo au terminal de surveillance.
